# EUROPÄISCHE PATENTANMELDUNG

(11) **EP 4 344 874 A1**
(43) Veröffentlichungstag der Anmeldung: **03.04.2024**
(21) Anmeldenummer: 23197963.4
(22) Anmeldetag: 18.09.2023
(51) Int. Cl.: B33Y 70/10

(54) **ZUSAMMENSETZUNG FÜR ADDITIVE FERTIGUNGSVERFAHREN**

(30) Priorität: 29.09.2022 DE 102022125088
(71) Anmelder: EOS GmbH Electro Optical Systems, 82152 Krailling (DE)
(72) Erfinder: FRÖHLICH, Daniel, 82166 Gräfelfing (DE); GALITZ, Verena, 82152 Krailling (DE)
(74) Vertreter: Beckord & Niedlich Patentanwälte PartG mbB

(57) **Zusammenfassung**

Die vorliegende Erfindung betrifft eine Zusammensetzung umfassend zumindest ein Polymer, wobei die Zusammensetzung zumindest einen Absorber enthält. Des Weiteren betrifft die vorliegende Erfindung ein Verfahren zur Herstellung der erfindungsgemäßen Zusammensetzung, ein Bauteil umfassend eine erfindungsgemäße Zusammensetzung sowie eine Vorrichtung zur Herstellung eines Bauteils und die Verwendung der erfindungsgemäßen Zusammensetzung.

## Beschreibung

Die vorliegende Erfindung betrifft eine Zusammensetzung umfassend zumindest ein Polymer, wobei die Zusammensetzung zumindest einen Absorber enthält. Des Weiteren betrifft die vorliegende Erfindung ein Verfahren zur Herstellung der erfindungsgemäßen Zusammensetzung, ein Bauteil umfassend eine erfindungsgemäße Zusammensetzung sowie eine Vorrichtung zur Herstellung eines Bauteils und die Verwendung der erfindungsgemäßen Zusammensetzung.

Additive Fertigungsverfahren zur Herstellung von Prototypen und die industrielle Fertigung von Bauteilen, die auf der Basis von pulverförmigen Werkstoffen arbeiten, ermöglichen die Herstellung von plastischen Gegenständen und gewinnen stetig an Bedeutung. Bei den Fertigungsverfahren werden schichtweise durch selektives Aufschmelzen und Verfestigen bzw. durch Aufbringen eines Binders und/oder Klebers die gewünschten Strukturen hergestellt. Der Prozess wird auch als "Additive Manufacturing", "Digital Fabrication" oder "Dreidimensionaler (3D)-Druck" bezeichnet.

Schon seit Jahrzehnten werden Verfahren in industriellen Entwicklungsprozessen zur Herstellung von Prototypen verwendet (Rapid Prototyping). Durch den technologischen Fortschritt der Systeme wurde jedoch auch mit der Fertigung von Teilen begonnen, welche den Qualitätsansprüchen eines Endprodukts gerecht werden (Rapid Manufacturing).

In der Praxis wird der Begriff "additive Fertigung" auch oft durch "generative Fertigung" oder "Rapid Technology" ersetzt. Additive Fertigungsverfahren, welche einen pulverförmigen Werkstoff verwenden, sind beispielsweise Sintern, Schmelzen oder Verkleben durch Binder.

Als pulverförmige Werkstoffe zur Herstellung von Formkörpern werden häufig Polymersysteme eingesetzt. Industrielle Anwender solcher Systeme verlangen eine gute Verarbeitbarkeit, hohe Formtreue und gute mechanische Eigenschaften daraus hergestellter Formkörper.

Kunststofffeinpulver, welche beispielsweise durch Vermahlung von Grobpulvern gewonnen werden, bestehen häufig aus irregulär geformten Partikeln. Aufgrund ihrer Oberflächenrauigkeit weist ein derartiges Schüttgut niedrige Schüttdichten und eine schlechte Fließfähigkeit auf. Da zudem auf Laser-Sinter-Systemen Material überwiegend gravitativ durch das Dosiersystem bis in die Prozesskammer gefördert wird, müssen die eingesetzten Pulver eine gewisse Fließfähigkeit aufweisen.

Darüber hinaus zeigen Materialien mit geringer Absorptionsrate im NIR-Bereich häufig ein problematisches Temperaturregelungsverhalten auf Laser-Sinter-Systemen. Die über die Infrarotheizstrahler in das System eingebrachte Energie kann nur zu geringen Teilen zur Phasenumwandlung des Kunststoffes genutzt werden. Durch den mangelnden Energieeintrag in das Kunststoffmaterial während der Belichtung wird so die Filmbildung behindert.

Während des Bauprozesses wird zudem häufig beobachtet, dass die über die IR(Infrarot)-Strahlung in das Pulverbett eingebrachte Energie nicht optimal genutzt werden kann. Die Oberflächentemperatur des Pulverbettes steigt nach einer kurzen Heizphase selbst ohne direkte Bestrahlung durch die Heizung über die gewünschte Temperatur. Für Materialien mit kleinem Prozessfenster bzw. Prozesstemperaturbereich kann hier bereits die Temperaturgrenze überschritten werden, bei welcher ein optimaler Schmelzprozess erfolgt. Ist die Energiemenge pro Zeiteinheit, welche durch den Laser in das Pulverbett eingebracht wird, zu groß, führt dies zu einem unkontrollierten Aufschmelzen oder koalieren von Pulverpartikeln und somit zur Schädigung des Materials, was schließlich die Bauteileigenschaften negativ beeinflusst.

Um ein Material, beispielsweise ein Polymersystem, in seinen Eigenschaften so anzupassen, dass dieses für additive Fertigungsverfahren geeignet ist, müssen zudem häufig Additive zugesetzt werden. Solche Additive führen häufig zu unerwünschten Eigenschaften, wie beispielsweise einem ungünstigen Aufschmelzverhalten durch Verkleinerung des Prozessfensters, d. h. des Temperaturbereichs, bei welchem das Polymersystem verarbeitet werden kann. Auch kann sich die Kristallisationstemperatur des Polymers, beispielsweise durch den Zusatz von Rieselhilfsmitteln bzw. Antiagglomerationsmitteln, ungünstig erhöhen, wodurch sich wiederum das Prozessfenster verkleinert.

Weitere unerwünschte Effekte bei Zugabe von Additiven können sich beispielsweise auch in einer Neigung zum Verzug bzw. einer mangelhaften Maßhaltigkeit der Bauteile äußern, wodurch die Verwendung der Additive bzw. von Systemen mit solchen Additiven in additiven Fertigungsverfahren stark begrenzt wird.

Es ist daher die Aufgabe der vorliegenden Erfindung, eine Zusammensetzung vorzusehen, die bevorzugt in additiven Fertigungsprozessen als Werkstoff für die Herstellung von Formkörpern mit einem verbesserten Aufschmelzverhalten geeignet ist. Insbesondere ist es eine Aufgabe der vorliegenden Erfindung, eine Zusammensetzung bereitzustellen, welche eine verbesserte Prozessrobustheit aufweist und zu einer verbesserten Bauteilqualität führt.

Diese Aufgabe wird erfindungsgemäß durch eine Zusammensetzung gemäß Anspruch 1 gelöst, welche zumindest ein Polymer und zumindest ein Additiv umfasst. Des Weiteren wird die Aufgabe durch ein Verfahren zur Herstellung der Zusammensetzung gemäß Anspruch 9, durch ein Verfahren zur Herstellung eines Bauteils gemäß Anspruch 12, durch eine Vorrichtung zur Herstellung eines dreidimensionalen Objekts gemäß Anspruch 14 sowie durch eine Verwendung der erfindungsgemäßen Zusammensetzung gemäß Anspruch 16 gelöst.

Die vorliegende Erfindung betrifft daher eine Zusammensetzung, insbesondere zur Verwendung als Aufbaumaterial zur additiven Herstellung eines 3D Objekts, umfassend
(a) zumindest ein Polymer,
   wobei das Polymer in Form von Polymerpartikeln vorliegt,
   wobei das Polymer ausgewählt ist aus zumindest einem thermoplastischen Polymer, und
(b) zumindest einen Absorber,
   wobei der Absorber bevorzugt in Form von Partikeln vorliegt, und wobei der Absorber einen Anteil an der Zusammensetzung von mindestens 0,05 Gew.-%, bevorzugt von mindestens 0,12 Gew-%, insbesondere von mindestens 0,22 Gew.-%, aufweist,
      und/oder
   wobei der Absorber einen Anteil an der Zusammensetzung von höchstens 2,5 Gew.-%, bevorzugt von höchstens 1,5 Gew.-%, insbesondere von höchstens 0,5 Gew.-%, aufweist,
   wobei die Zusammensetzung einen Rückzugswinkel von mindestens 50 °, bevorzugt von mindestens 60 °, und/oder von höchstens 150 °, bevorzugt von höchstens 120 °, aufweist,
      und
   wobei die Zusammensetzung bevorzugt einen Fortschreitewinkel von mindestens 155 °, bevorzugt von mindestens 158 °, und/oder von höchstens 175 °, bevorzugt von höchstens 170 °, aufweist.

In ihrer einfachsten Ausführungsform umfasst eine erfindungsgemäße Zusammensetzung ein Polymer bzw. ein Polymersystem, welches ausgewählt ist aus einem thermoplastischen Polymer und einem Absorber.

Unter der Bezeichnung "Polymerpartikel" werden vorliegend Teilchen eines Polymers mit einer Partikelgröße im Größenbereich von µm bis mm verstanden, wobei die Struktur der Teilchen keine Rolle spielt. Bevorzugt werden die Polymerpartikel durch Vermahlen von Polymer-Flakes hergestellt oder erhalten. Unter der Bezeichnung "Polymer-Flakes" wird vorliegend eine grobkörnige Form des Polymers verstanden, in welcher das Polymer nach der Polykondensation vorliegt. Der Vorteil der direkten Vermahlung von Polymer-Flakes liegt im spröden Bruchverhalten der Grobpartikel.

Erfindungsgemäß ist das Polymer ausgewählt aus zumindest einem thermoplastischen Polymer, wobei das Polymer bevorzugt in dessen Reinform, d. h. ohne Zusätze, vorliegt.

Weiter bevorzugt liegt das thermoplastische Polymer in Pulverform vor.

Erfindungsgemäß weist die Zusammensetzung einen Rückzugswinkel von mindestens 50 °, bevorzugt von mindestens 60 °, auf. Höchstens weist die Zusammensetzung einen Rückzugswinkel von 150 °, bevorzugt von höchstens 120 °, auf.

Vorzugsweise weist die Zusammensetzung einen Fortschreitewinkel von mindestens 155 °, bevorzugt von mindestens 158 °, auf. Höchstens weist eine bevorzugte Zusammensetzung einen Fortschreitewinkel von 175 °, bevorzugt von höchstens 170 °, auf,

Der Rückzugswinkel und der Fortschreitewinkel werden dabei mit Hilfe der Bestimmung des dynamischen Kontaktwinkels zu Wasser ermittelt.

Der dynamische Kontaktwinkel ist der im Zuge der Benetzung (Fortschreitewinkel) oder Entnetzung (Rückzugswinkel) eines Festkörpers, im vorliegenden Fall eines Schüttguts, auftretende Kontaktwinkel. Insbesondere der Fortschreitewinkel wird zur Untersuchung fester Oberflächen herangezogen, weil der Kontaktwinkel dabei an einer immer frisch benetzten Fläche und außerdem an vielen, dicht beieinander liegenden Positionen gemessen wird. Auf diese Weise werden Zeiteffekte wie z.B. Verdunstung minimiert und lokale Inhomogenität herausgemittelt. Der bei der Entnetzung auftretende Rückzugswinkel ist in der Regel kleiner als der Fortschreitewinkel. Diese als "Hysterese" bezeichnete Differenz dient als Maß für die Rauigkeit des Festkörpers.

Methoden zur Bestimmung des dynamischen Kontaktwinkels und des Rückzugswinkels sind dem Fachmann bekannt und können beispielsweise mit Hilfe eines KRÜSS Force Tensiometers K100 durchgeführt und über ADVANCE Software vollautomatisch ausgewertet werden.

Wie bereits oben erläutert, kann ein vorteilhaftes Polymerpulver bzw. vorteilhafte Polymerpartikel vorzugsweise aus Polymerpellets oder Polymerisationsflakes, welche aus einem Polymerisationsverfahren erhalten und nachfolgend vermahlen werden, hergestellt bzw. erhalten werden.

Bevorzugt weist ein solches Grobpulver eine BET-Oberfläche von mehr als 1 m²/g auf. Bei der Verwendung von Polymerisationsflocken wird ein Zerkleinerungsschritt, d. h. eine Vermahlung der Polymerisationsflocken, vorzugsweise oberhalb der Raumtemperatur durchgeführt.

Um Partikel mit runder Form zu erhalten, werden die Polymerpartikel vorzugsweise durch thermo-mechanische Beanspruchung behandelt. Eine solche Behandlung wird in einem Mischer, vorzugsweise in einem Hochgeschwindigkeitsmischer, bei einer bevorzugten Temperatur von mindestens 30 °C und unterhalb des Schmelzpunkts Tm des Polymers durchgeführt.

Vorzugsweise handelt es sich bei der Zusammensetzung um einen sogenannten Dry-Blend, d. h. eine Trockenmischung aus Polymerpartikeln unter Zusatz des Absorbers, wobei der Absorber, im Gegensatz zu einem inkorporierten Absorber, bevorzugt zwischen den Polymerpartikeln vorliegt bzw. an die Polymerpartikel gebunden ist (beispielsweise auf deren Oberfläche an- oder aufgelagert) und so vorteilhaft als "Schmiermittel" wirken kann. Hierdurch kann beispielsweise eine verbesserte Fließfähigkeit bzw. Rieselfähigkeit erreicht werden. Der Dry-Blend wird dabei vorzugsweise bei einer Temperatur unterhalb der Erweichungstemperatur der Polymerpartikel hergestellt.

Erfindungsgemäß weist die Zusammensetzung einen Gehalt des Absorbers von mindestens 0,05 Gew.-%, bevorzugt von mindestens 0,12 Gew-%, insbesondere von mindestens 0,22 Gew.-%, auf. Höchstens liegt der Anteil des Absorbers in der Zusammensetzung bei 2,5 Gew.-%, bevorzugt bei höchstens 1,5 Gew.-%, insbesondere bei höchstens 0,5 Gew.-%. Vorzugsweise liegt der Absorber in Form von Partikeln vor.

Die Bezeichnung "Absorber" steht vorliegend für einen Stoff, welcher elektromagnetische Wellen, vorzugsweise sichtbares Licht, absorbiert. Vorteilhafte Absorber weisen ein Absorptionsspektrum auf, das die Wellenlänge im Mittel- oder Nahinfrarotbereich, im Bereich des sichtbaren Lichts oder des Ultraviolettbereichs absorbieren kann. Bevorzugt absorbiert der Absorber Licht einer Wellenlänge im Bereich von 1000 bis 1400 nm.

Die Stärke der Absorption durch einen Absorber wird als Absorptionsgrad beschrieben, der in der Regel von einer Vielzahl von Parametern (Material, Temperatur, Wellenlänge) abhängig ist. Der Begriff "Absorption" steht vorliegend für die Aufnahme von elektromagnetischen Wellen, insbesondere Licht, durch den Absorber. Durch die Absorption elektromagnetischer Wellen wird die aufgenommene Energie vorteilhaft in thermische Energie umgewandelt.

Methoden zur Bestimmung des Gehalts des Absorbers in der Zusammensetzung bzw. dem Polymer sind dem Fachmann bekannt und können beispielsweise mittels Thermogravimetrie (TG) von Polymeren / Kunststoffen nach DIN EN ISO 11358 erfolgen. Vorzugsweise ist der Absorber an das Polymer bzw. die Polymerpartikel gebunden, zum Beispiel auf deren Oberfläche an- oder aufgelagert. Um eine Vergleichbarkeit der Messungen des Polymers mit und ohne Absorber zu gewährleisten, erfolgt die TG dabei so, dass stets dieselben Methoden unter Einhaltung der gleichen Parameter durchgeführt werden.

Erfindungsgemäß kann der Absorber in der Zusammensetzung bzw. dem Polymer bei der Verwendung in additiven Fertigungsverfahren eine verbesserte Prozessierbarkeit, insbesondere eine verbesserte Fließfähigkeit der Zusammensetzung, bewirken. Eine dem Fachmann bekannte Methode, die Fließfähigkeit eines Pulvers zu quantifizieren, kann die Bestimmung mittels Scherzelle darstellen. Diese kann mit einem Pulverrheometer vom Typ Freeman FT4 erfolgen. Die Daten der aufgezeichneten Fließgrenzen einer erfindungsgemäßen Zusammensetzung werden linearisiert, um das Bestimmtheitsmaß R² zu ermitteln.

Unter der Bezeichnung "Bestimmtheitsmaß" (*syn.* Determinationskoeffizient) wird vorliegend eine Kennzahl zur Beurteilung der Anpassungsgüte einer Regression verstanden - beispielsweise, um zu bewerten, wie gut Messwerte zu einem Modell passen. Das Bestimmtheitsmaß beruht auf der Quadratsummenzerlegung, bei der die totale Quadratsumme in die (durch das Regressionsmodell) erklärte Quadratsumme und in die Residuenquadratsumme zerlegt wird.

Eine erfindungsgemäße Zusammensetzung sollte ein Bestimmtheitsmaß R² > 0,9990 aufweisen, um als prozessfähig zu gelten.

Weiter vorteilhaft weist eine bevorzugte Zusammensetzung eine Verringerung der Kohäsionsspannung auf, welche vorzugsweise bei unter 0,5 x 10³ Pa (Pascal), bevorzugt bei unter 0,4 x 10³ Pa, insbesondere bei unter 0,3 x 10³ Pa, liegt. Mindestens weist eine bevorzugte Zusammensetzung eine Köhasionsspannung von über 0,1 x 10³ Pa auf.

Ein zu niedriger Gehalt des Absorbers, d. h. ein Gehalt von unter 0,05 Gew.-%, hat keinen oder einen zu geringen Effekt; im Gegensatz hierzu bewirkt ein zu hoher Gehalt des Absorbers, d. h. ein Gehalt von über 2,5 Gew.-%, in der Zusammensetzung, dass die Schmelze nicht mehr hinreichend verfließt, wodurch die Porosität steigt und eine ausreichende Schichtanbindung nicht mehr gewährleistet werden kann.

Insofern eine vorteilhafte Zusammensetzung mehr als einen Absorber umfasst, so addieren sich die Anteile der einzelnen Absorber derart, dass deren Summe den erfindungsgemäßen Anteil wie oben spezifiziert ergibt.

Des Weiteren gewährleistet die erfindungsgemäße Zusammensetzung eine verbesserte Fließfähigkeit bzw. Rieselfähigkeit, wodurch im Zuge von additiven Fertigungsprozessen ein gleichmäßiger Pulvereintrag ermöglicht wird. Eine gute Fließfähigkeit eines Schüttguts ist dann gegeben, wenn das Schüttgut leicht zum Fließen gebracht werden kann. Die wichtigste Kenngröße hierfür ist die Rieselfähigkeit, also das Ausmaß der freien Beweglichkeit des Schüttguts.

Unter einem Polymer bzw. einem Polymersystem wird in der vorliegenden Patentanmeldung zumindest ein Homo- und/oder ein Heteropolymer verstanden, welches aus mehreren Monomeren aufgebaut ist. Während Homopolymere eine kovalente Verkettung gleicher Monomere aufweisen, sind Heteropolymere (auch Copolymere genannt) aus kovalenten Verkettungen unterschiedlicher Monomere aufgebaut. Dabei kann ein Polymersystem gemäß der vorliegenden Erfindung sowohl ein Gemisch aus den oben genannten Homo- und/oder Heteropolymeren bzw. auch mehr als ein Polymersystem umfassen. Ein solches Gemisch wird in der vorliegenden Patentanmeldung auch als Polymerblend bezeichnet.

Heteropolymere im Sinne der vorliegenden Erfindung können dabei ausgewählt sein aus statistischen Copolymeren, in denen die Verteilung der beiden Monomere in der Kette zufällig ist, aus Gradientcopolymeren, die prinzipiell den statistischen Copolymeren ähnlich sind, in denen jedoch der Anteil des einen Monomers im Verlauf der Kette zu- und des anderen abnimmt, aus alternierenden Copolymeren, in denen sich die Monomere alternierend abwechseln, aus Blockcopolymeren bzw. Segmentcopolymeren, die aus längeren Sequenzen oder Blöcken jedes Monomers bestehen, und aus Pfropfcopolymeren, bei denen Blöcke eines Monomers auf das Gerüst (Rückgrat) eines anderen Monomers aufgepfropft sind.

Vorzugsweise liegt die erfindungsgemäße Zusammensetzung in Form eines Pulvers vor.

Die erfindungsgemäße Zusammensetzung kann vorteilhaft für additive Fertigungsprozesse eingesetzt werden. Zu additiven Fertigungsprozessen zählen insbesondere Verfahren, die zur Herstellung von Prototypen (Rapid Prototyping) und Bauteilen (Rapid Manufacturing) geeignet sind, bevorzugt aus der Gruppe der pulverbasierten Fertigungsverfahren, besonders bevorzugt der pulverbett-basierten Verfahren umfassend Laser-Sintern, Highspeed-Sintern, Binder Jetting, Multi-Jet Fusion, selektives Masken-Sintern, selektives Laser-Schmelzen oder LaserProFusion. Bevorzugt erfolgt eine Verfestigung durch Einwirkung elektromagnetischer Strahlung. Insbesondere ist die erfindungsgemäße Zusammensetzung jedoch zur Verwendung für das Laser-Sintern oder LaserProFusion vorgesehen. Der Begriff "Laser-Sintern" ist dabei gleichbedeutend mit dem Begriff "selektives Laser-Sintern" (SLS) zu verstehen.

Des Weiteren betrifft die vorliegende Erfindung ein Verfahren zur Herstellung einer erfindungsgemäßen Zusammensetzung, wobei das Verfahren folgende Schritte umfasst:
(i) Bereitstellen zumindest eines Polymers,
   wobei das Polymer bevorzugt in Form von Polymerpartikeln vorliegt,
   wobei das Polymer ausgewählt ist aus zumindest einem thermoplastischen Polymer,
(ii) Mischen, vorzugsweise Dispergieren, des Polymers mit zumindest einem Absorber,
(iii) wobei der Absorber bevorzugt in Form von Partikeln vorliegt, wobei der zumindest eine Absorber besonders bevorzugt aus Ruß ausgewählt ist,
und
wobei der Absorber einen Anteil an der Zusammensetzung von mindestens 0,02 Gew.-%, bevorzugt von mindestens 0,12 Gew-%, insbesondere von mindestens 0,22 Gew.-%, aufweist,
   und/oder
wobei der Absorber einen Anteil an der Zusammensetzung von höchstens 2,5 Gew.-%, bevorzugt von höchstens 1,5 Gew.-%, insbesondere von höchstens 0,5 Gew.-%, aufweist,
wobei die Zusammensetzung einen Rückzugswinkel von mindestens 50 °, bevorzugt von mindestens 60 °, und/oder von höchstens 150 °, bevorzugt von höchstens 120 °, aufweist,
   und
wobei die Zusammensetzung bevorzugt einen Fortschreitewinkel von mindestens 155 °, bevorzugt von mindestens 158 °, und/oder von höchstens 175 °, bevorzugt von höchstens 170 °, aufweist.

Unter "Bereitstellen" wird dabei sowohl eine Herstellung vor Ort als auch ein Zuliefern eines Polymers bzw. eines Polymersystems verstanden.

Gemäß einer bevorzugten Ausführungsform sind die im erfindungsgemäßen Verfahren bereitgestellten Polymerpartikel durch Vermahlung von Polymer-Flakes hergestellt bzw. erhältlich. Solche Polymer-Flakes sind im Wesentlichen semi-kristallin, weshalb die Polymer-Flakes vorteilhaft ohne Vorbehandlung nicht kryogen vermahlen werden können. Vorzugsweise weisen die Polymerpartikel eine BET-Oberfläche von mehr als 1 m²/g auf.

Bei Verwendung von Polymer-Flakes wird ein Mahlschritt vorzugsweise unterhalb Raumtemperatur durchgeführt, noch mehr bevorzugt durch Zugabe von flüssigem Stickstoff. Vorteilhafterweise führt die Verwendung von flüssigem Stickstoff zu einer höheren Pulverausbeute (einer bestimmten Teilchengröße).

Um Teilchen mit runder Form zu erhalten, werden die Polymerteilchen bevorzugt thermomechanisch behandelt. Eine solche Behandlung wird in einem Mischer, vorzugsweise in einem Hochgeschwindigkeitsmischer, bei einer bevorzugten Temperatur von mindestens 30 °C unterhalb der Schmelztemperatur Tm des Polymers durchgeführt. Im Folgenden werden die Bezeichnungen, Dispergieren, Mischen, Beimischen, als synonym verstanden. Ein Vorgang des Dispergierens, Mischens, Beimischens, kann dabei in einem Dispergator und/oder Rührer (wie beispielsweise in einem Labor - Containermischer der Firma Mixaco Maschinenbau) erfolgen.

Insofern eine Abtrennung von Komponenten der Mischung bzw. Dispersion notwendig ist, erfolgt diese vorzugsweise durch Zentrifugieren, Sieben und/oder Filtrieren. Gegebenenfalls kann Trocknen zum Erhalt der getrockneten Zusammensetzung z. B. in einem Ofen, beispielsweise in einem Vakuumtrockner, erfolgen.

Schließlich kann ein vorteilhaftes Herstellverfahren eine Verpackung der Zusammensetzung vorsehen. Ein Verpacken einer nach dem erfindungsgemäßen Verfahren hergestellten Zusammensetzung, insbesondere aus Polymer-Flakes, erfolgt dabei bevorzugt unter Ausschluss von Luftfeuchtigkeit oder unter kontrollierter Feuchtigkeit, um beispielsweise eine elektrostatische Aufladung des Pulvers zu vermeiden.

Vorteilhaft erfolgt eine anschließende Lagerung der erfindungsgemäßen Zusammensetzung unter reduzierter Feuchtigkeit zur Vermeidung von beispielsweise Verbackungseffekten, wodurch die Lagerstabilität der erfindungsgemäßen Zusammensetzung verbessert wird. Auch verhindert ein vorteilhaftes Verpackungsmaterial einen Zutritt von Feuchtigkeit, insbesondere von Luftfeuchtigkeit, zur erfindungsgemäßen Zusammensetzung.

Eine nach dem erfindungsgemäßen Verfahren hergestellte Zusammensetzung wird dabei vorteilhaft als verfestigbares Pulvermaterial in einem Verfahren zur schichtweisen Herstellung eines dreidimensionalen Objekts aus pulverförmigem Material verwendet, bei dem aufeinander folgende Schichten des zu bildenden Objekts aus diesem verfestigbaren Pulvermaterial nacheinander an entsprechenden bzw. vorgegebenen Stellen durch den Eintrag von Energie, bevorzugt von elektromagnetischer Strahlung, insbesondere durch den Eintrag von Laserlicht, verfestigt werden.

Auch umfasst die vorliegende Erfindung eine Zusammensetzung, insbesondere für Lasersinterverfahren, welche nach dem vorstehend beschriebenen Verfahren erhältlich ist bzw. erhalten wird.

Schließlich wird eine erfindungsgemäße Zusammensetzung zum Herstellen eines Bauteils, insbesondere eines dreidimensionalen Objekts, durch schichtweises Aufbringen und selektives Verfestigen eines Aufbaumaterials, vorzugsweise eines Pulvers, verwendet. Unter der Bezeichnung "Verfestigen" ist dabei ein zumindest teilweises An- oder Aufschmelzen mit anschließendem Erstarren bzw. Wiederverfestigen des Aufbaumaterials zu verstehen.

Unter der Bezeichnung "An- oder Aufschmelzen" wird vorliegend der Prozess verstanden, bei dem das Pulver während eines additiven Fertigungsprozesses, beispielsweise im Pulverbett, durch Eintrag von Energie, bevorzugt mittels elektromagnetischer Wellen, insbesondere durch Laserstrahlen, zumindest teilweise geschmolzen wird. Die erfindungsgemäße Zusammensetzung gewährleistet vorteilhaft ein zumindest teilweises Aufschmelzen und Fertigung von prozesssicheren Formkörpern mit hoher mechanischer Stabilität und Formtreue.

Dabei weist ein vorteilhaftes Verfahren zur Herstellung eines Bauteils zumindest folgende Schritte auf:
(i) Aufbringen einer Schicht einer erfindungsgemäßen Zusammensetzung und/oder einer Zusammensetzung hergestellt nach einem erfindungsgemäßen Verfahren, vorzugsweise eines Pulvers, auf ein Baufeld,
(ii) selektives Verfestigen der aufgebrachten Schicht der Zusammensetzung an Stellen, die einem Querschnitt des herzustellenden Objekts entsprechen, bevorzugt mittels einer Bestrahlungseinheit, und
(iii) Absenken des Trägers und Wiederholen der Schritte des Aufbringens und des Verfestigens, bis das Bauteil, insbesondere das dreidimensionale Objekt, fertiggestellt ist.

Unter "Aufbaumaterial" wird in der vorliegenden Patentanmeldung ein Pulver bzw. ein verfestigbares Pulvermaterial verstanden, welches mittels additiver Fertigungsverfahren, bevorzugt mittels Pulverbett-basierter Verfahren, insbesondere mittels Laser-Sintern bzw. Laserschmelzen, zu Formkörpern bzw. 3D-Objekten verfestigt werden kann. Als derartiges Aufbaumaterial eignet sich insbesondere die erfindungsgemäße Zusammensetzung.

Als Baufeld dient dabei eine Ebene, welche sich auf einem Träger innerhalb einer Maschine zur additiven Fertigung in einem bestimmten Abstand zu einer darüber angebrachten Bestrahlungseinheit, die zum Verfestigen des Aufbaumaterials geeignet ist, befindet. Auf dem Träger wird das Aufbaumaterial so positioniert, dass dessen oberste Schicht mit der Ebene übereinstimmt, welche verfestigt werden soll. Der Träger kann dabei im Laufe des Fertigungsverfahrens, insbesondere des Laser-Sinterns, so eingestellt werden, dass jede neu aufgebrachte Schicht des Aufbaumaterials dieselbe Entfernung zur Bestrahlungseinheit, vorzugsweise eines Lasers, aufweist und auf diese Weise durch Einwirkung der Bestrahlungseinheit verfestigt werden kann.

Auch umfasst die vorliegende Erfindung ein Bauteil, welches nach dem vorstehend beschriebenen Verfahren erhältlich ist bzw. erhalten wird.

Ein Bauteil, insbesondere ein 3D-Objekt, welches aus der erfindungsgemäßen Zusammensetzung hergestellt wurde, kann eine vorteilhafte Zugfestigkeit und Bruchdehnung aufweisen. So weist ein bevorzugtes Bauteil, welches durch das oben beschriebene Verfahren erhalten wird, vorzugsweise eine Zugfestigkeit von mindestens 70 MPa, bevorzugt von mindestens 80 MPa bis höchstens 100 MPa, bevorzugt von höchstens 90 MPa und eine Bruchdehnung von mindestens 2 %, insbesondere von mindestens 2,5 % bis höchstens 3 %, bevorzugt bis höchstens 3,5 %, auf. Die Zugfestigkeit kennzeichnet dabei die maximale mechanische Zugspannung, die im Werkstoff auftreten kann. Die Bestimmung der Zugfestigkeit ist dem Fachmann bekannt und kann beispielsweise nach der DIN EN ISO 527 bestimmt werden. Die Bruchdehnung kennzeichnet die Verformungsfähigkeit eines Werkstoffs im plastischen Bereich (auch Duktilität genannt) bis zum Bruch und kann beispielsweise mittels DIN EN ISO 527-2 bestimmt werden.

Des Weiteren weist ein Bauteil, welches aus der erfindungsgemäßen Zusammensetzung hergestellt wurde, eine verbesserte Maßhaltigkeit und/oder einen geringeren Bauteilverzug auf. Unter Maßhaltigkeit versteht man dabei, dass die Ist-Maße eines Werkstücks innerhalb der vereinbarten zulässigen Abweichung bzw. Toleranz vom festgelegten Nennmaß liegen. Im Lasersinterprozess kann diese Maßhaltigkeit vorzugsweise anhand des Bauteilverzugs ermittelt werden. Des Weiteren bezeichnet der Begriff die Beständigkeit eines Werkstoffes zum Beispiel im Hinblick auf eine Dehnung und Schrumpfung. Häufige Ursache von Maßveränderungen sind beispielsweise Temperatur, Druck- oder Zugkräfte, Alterung und Feuchtigkeit.

Des Weiteren umfasst die vorliegende Erfindung eine Vorrichtung zur Herstellung eines dreidimensionalen Objekts durch schichtweise Verfestigung einer Zusammensetzung an den Punkten, die dem Querschnitt des dreidimensionalen Objekts in der jeweiligen Schicht entsprechen, wobei die Vorrichtung mindestens eine Strahlungsquelle, die zur Abgabe von elektromagnetischer Strahlung ausgestaltet ist, eine Prozesskammer, die als (offener) Behälter ausgestaltet ist, und eine Behälterwand aufweist, einen Träger, der sich in der Prozesskammer befindet, wobei die Prozesskammer und der Träger gegeneinander in vertikaler Richtung beweglich sind, und einen in horizontaler Richtung beweglichen Vorratsbehälter und Beschichter aufweist, wobei der Vorratsbehälter mindestens teilweise mit einer erfindungsgemäßen Zusammensetzung gefüllt ist.

Vorzugsweise umfasst die Strahlungsquelle zumindest einen Laser, bevorzugt zumindest einen Diodenlaser oder einen Gaslaser (z. B. CO₂, CO).

Vorzugsweise wird zur Erwärmung der erfindungsgemäßen Zusammensetzung während des Bauprozesses zumindest eine IR-Strahlungsquelle (wie beispielsweise ein Heizstrahler) verwendet.

Eine Verwendung der erfindungsgemäßen Zusammensetzung kann sowohl im Rapid Prototyping als auch im Rapid Manufacturing erfolgen. Hierbei werden beispielsweise additive Fertigungsverfahren, vorzugsweise aus der Gruppe von pulverbasierten Fertigungsverfahren, bevorzugt von pulverbett-basierten Verfahren umfassend Laser-Sintern, Highspeed-Sintern, Binder Jetting, Multi-Jet Fusion, selektives Masken-Sintern, selektives Laser-Schmelzen oder LaserProFusion, insbesondere zur Verwendung für Laser-Sintern, eingesetzt, bei welchen vorzugsweise dreidimensionale Objekte schichtweise durch selektives Projizieren eines Laserstrahls mit einer gewünschten Energie auf ein Pulverbett aus pulverförmigen Werkstoffen gebildet werden. Prototypen oder Fertigungsteile können durch diesen Prozess zeit- und kosteneffizient hergestellt werden.

Mit "Rapid Manufacturing" sind insbesondere Verfahren zur Herstellung von Bauteilen gemeint, also die Herstellung von mehr als einem gleichen Teil, bei dem aber die Produktion z. B. mittels eines Spritzgießwerkzeugs nicht wirtschaftlich oder aufgrund der Geometrie des Bauteils nicht möglich ist, vor allem, wenn die Teile eine sehr komplexe Gestaltung aufweisen. Beispiele hierfür sind Teile für hochwertige PKW, Renn- oder Rallyefahrzeuge, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in welchen die erfindungsgemäßen Teile eingesetzt werden, können z. B. die Luft- und Raumfahrtindustrie sein, die Medizintechnik, der Maschinenbau, der Automobilbau, die Sportindustrie, die Haushaltswarenindustrie, Elektroindustrie bzw. Lifestyle. Ebenfalls von Bedeutung ist die Herstellung einer Vielzahl ähnlicher Bauteile, beispielsweise von personalisierten Bauteilen, wie Prothesen, (Innenohr)Hörgeräte und dergleichen, deren Geometrie individuell an den Träger angepasst werden kann.

Schließlich umfasst die vorliegende Erfindung eine Zusammensetzung als verfestigbares Pulvermaterial in einem Verfahren zur schichtweisen Herstellung eines dreidimensionalen Objekts aus pulverförmigem Material, bei dem aufeinander folgende Schichten des zu bildenden Objekts aus diesem verfestigbaren Pulvermaterial nacheinander an entsprechenden Stellen durch den Eintrag von Energie verfestigt werden, bevorzugt durch den Eintrag von elektromagnetischer Strahlung, insbesondere durch den Eintrag von Laserlicht.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und Merkmale verschiedener Ausführungsbeispiele zu neuen Ausführungsbeispielen kombiniert werden können.

Prinzipiell kann der Absorber in der vorteilhaften Zusammensetzung hydrophile oder hydrophobe Eigenschaften aufweisen.

Bevorzugt ist der Absorber aus zumindest einem Ruß ausgewählt. Der Begriff "Ruß" ist vorliegend ein Überbegriff für eine Vielzahl an Produkten, die zur Schwarzfärbung von Polymeren verwendet werden. Vorzugsweise handelt es sich hierbei um eine Form des elementaren Kohlenstoffs, welcher über den Weg der kontrollierten Gas-Phasen Pyrolyse oder partiellen Verbrennung von Kohlenwasserstoffen hergestellt wird. Bevorzugt handelt es sich um ein poröses, sehr feines Pulver mit geringem Schüttgewicht und großer spezifischer Oberfläche, wie beispielsweise Spezialschwarz 4 oder Monarch 570 und dergleichen. Ein solcher Ruß kann z. B. über die Firma Orion Carbons kommerziell erhalten werden.

Vorzugsweise wird daher als Aufbaumaterial, welches in dem additiven Fertigungsverfahren eingesetzt wird, das oben beschriebene thermoplastische Polymer mit einem Absorber verwendet. Dieses kann durch Einwirkung von elektromagnetischer Strahlung einer spezifischen Wellenlänge oder eines spezifischen Wellenlängenbereichs zumindest teilweise an- oder aufgeschmolzen und anschließend wieder verfestigt werden.

Eine bevorzugte Vorrichtung zur Herstellung eines 3D-Objekts umfasst eine Strahlungsquelle, insbesondere einen Laser, welche/r Licht einer Wellenlänge im Bereich von 500 bis 1500 nm, vorzugsweise in einem der Wellenlängenbereiche 1064±8 nm und/oder 980±10 nm und/oder 940±10 nm und/oder 810±10 nm und/oder 640±10 nm oder Licht einer Wellenlänge von etwa 10,6 µm oder im Bereich von 4,8 bis 8,3 µm, bevorzugt bei etwa 5 µm, emittiert.

Vorzugsweise enthält das Polyetherketonketon folgende Wiederholungseinheiten:

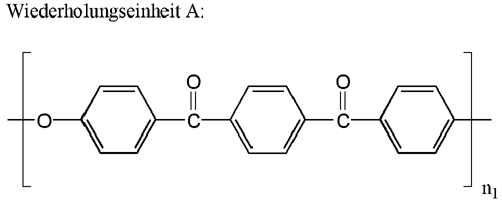

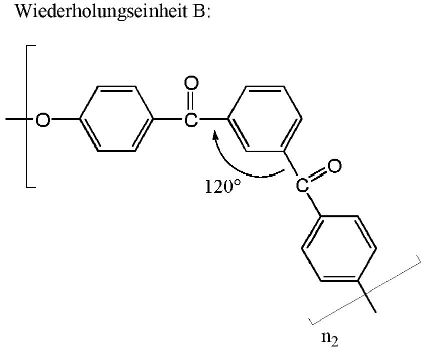

Bevorzugt liegt das Verhältnis der Wiederholungseinheit A zu Wiederholungseinheit B bei etwa 60 zu etwa 40.

Bevorzugt liegt dabei das Verhältnis von 1,4-Phenyleneinheiten in der Wiederholungseinheit A zu 1,3-Phenyleneinheiten in der Wiederholungseinheit B bei 90 zu 10 bis 10 zu 90, besonders bevorzugt bei 70 zu 30 bis 10 zu 90, insbesondere bei 60 zu 40 bis 10 zu 90, insbesondere bevorzugt von etwa 60 zu etwa 40. Die Anzahl n₁ bzw. n₂ der Wiederholungseinheit A bzw. Wiederholungseinheit B kann dabei bevorzugt bei mindestens 10 und/oder bei höchstens 2 000 liegen.

Bevorzugt liegt das Molekulargewicht eines solchen Polyetherketonketons bei mindestens 10 000 D, besonders bevorzugt bei mindestens 15 000 D und/oder bei höchstens 200 000 D, insbesondere bei mindestens 15 000 D und/oder bei höchstens 100 000 D. Das Gewichtsmittel des Molekulargewichts eines solchen bevorzugten Polymers beträgt vorzugsweise mindestens 20 000 D, besonders bevorzugt mindestens 30 000 D und/oder höchstens 500 000 D, insbesondere mindestens 30 000 D und/oder höchstens 200 000 D.

Ein bevorzugtes Polyetherketonketon-Polymer kann beispielsweise unter dem Handelsnamen Kepstan der Serie 6000 (z. B. Kepstan 6001, 6002, 6003 oder 6004, Arkema, Frankreich) bezogen werden.

Gemäß einer weiter bevorzugten Ausführungsform liegt die Schmelztemperatur des zumindest einen Polyaryletherketons bei bis zu etwa 400 °C, vorzugsweise bei bis zu etwa 350 °C, insbesondere bei bis zu etwa 310 °C. Mindestens liegt die Schmelztemperatur des zumindest einen Polyaryletherketons bei etwa 200 °C.

Unter dem Begriff "Schmelztemperatur" ist dabei die Temperatur bzw. der Temperaturbereich zu verstehen, bei welcher ein Stoff, vorzugsweise ein Polymer bzw. Copolymer bzw. Polymerblend vom festen in den flüssigen Aggregatszustand übergeht.

Insofern in der vorliegenden Schrift der Begriff "etwa", "mindestens etwa" oder "höchstens etwa" bzw. "bis zu etwa" (etc.) verwendet wird, bedeutet dies, dass der genannte Zahlenwert eine mögliche Abweichung von bis zu 10 bis 15 % aufweisen kann. Bevorzugt liegt der Zahlenwert bei dem exakten Zahlenwert.

Die Glasübergangstemperatur des zumindest einen Polyaryletherketons liegt bevorzugt bei mindestens 115 °C, vorzugsweise bei mindestens 135 °C, insbesondere bei mindestens 155 °C. Unter dem Begriff "Glasübergangstemperatur" ist dabei die Temperatur zu verstehen, bei welcher ein Polymer in einen gummiartigen bis zähflüssigen Zustand übergeht. Die Bestimmung der Glasübergangstemperatur ist dem Fachmann bekannt und kann beispielsweise mittels DSC gemäß DIN EN ISO 11357 erfolgen.

Die niedrige Schmelztemperatur bzw. Glasübergangstemperatur des zumindest einen Polyaryletherketons ermöglicht vorteilhaft eine geringe Verarbeitungstemperatur, insbesondere beim Laser-Sintern, sowie eine geringere Alterung bzw. einen verbesserten Auffrischfaktor der Zusammensetzung.

Unter dem Begriff "Auffrischfaktor" ist dabei das Verhältnis von Neupulver zu Altpulver zu verstehen. Bei Verwendung der genannten Zusammensetzung ist vorteilhaft der Auffrischfaktor verbessert bzw. die Alterung wesentlich herabgesetzt und daher ein Verlust an ungenutztem Pulver deutlich reduziert, wodurch schließlich auch die Wirtschaftlichkeit bei der Herstellung eines Formkörpers aus der vorteilhaften Zusammensetzung deutlich verbessert wird.

Eine weitere bevorzugte Ausführungsform umfasst dabei ein Polyetheretherketon-Polyetherdiphenyletherketon (PEEK-PEDEK) mit folgenden Wiederholungseinheiten:

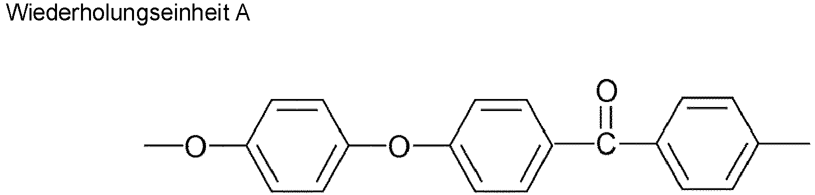

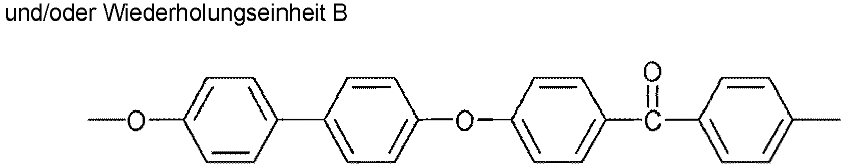

Das genannte Polyetheretherketon-Polyetherdiphenyletherketon Polymer kann dabei einen Stoffmengenanteil von zumindest 68 Mol-%, bevorzugt von zumindest 71 Mol-%, der Wiederholungseinheit A aufweisen. Besonders bevorzugte Polyetheretherketon-Polyetherdiphenyletherketon Polymere weisen einen Stoffmengenanteil von zumindest 71 Mol-%, oder, weiter bevorzugt von zumindest 74 Mol-%, der Wiederholungseinheit A auf. Das genannte Polyetheretherketon-Polyetherdiphenyletherketon Polymer weist bevorzugt einen Stoffmengenanteil von weniger als 90 Mol-%, weiter bevorzugt von 82 Mol-% oder weniger der Wiederholungseinheit A auf. Das genannte Polymer umfasst weiter einen bevorzugten Stoffmengenanteil von mindestens 68 Mol-%, besonders bevorzugt von mindestens 70 Mol-%, insbesondere von mindestens 72 Mol-%, der Wiederholungseinheit A auf. Höchstens weist das Polyetheretherketon-Polyetherdiphenyletherketon Polymer einen bevorzugten Stoffmengenanteil von 82 Mol-%, besonders bevorzugt von höchstens 80 Mol-%, insbesondere von höchstens 77 Mol-%, der Wiederholungseinheit A auf.

Dabei liegt das Verhältnis der Wiederholungseinheit A zur Wiederholungseinheit B vorzugsweise bei mindestens 65 zu 35 und/oder bei höchstens 95 zu 5.

Die Anzahl der Wiederholungseinheiten A und B kann dabei bevorzugt bei mindestens 10 und/oder bei höchstens 2 000 liegen. Bevorzugt liegt das Molekulargewicht (MW) eines solchen Polyetheretherketon-Polyetherdiphenyletherketons bei mindestens 10 000 D (Dalton, *syn.* Da), besonders bevorzugt bei mindestens 15 000 D und/oder bei höchstens 200 000 D, insbesondere bei mindestens 15 000 D und/oder bei höchstens 100 000 D. Das Gewichtsmittel des Molekulargewichts eines solchen bevorzugten Polymers beträgt vorzugsweise mindestens 20 000 D, besonders bevorzugt mindestens 30 000 D und/oder höchstens 500 000 D, insbesondere mindestens 30 000 D und/oder höchstens 200 000 D.

Insofern in der vorliegenden Erfindung Bezug auf das Molekulargewicht genommen wird, so handelt es sich dabei um das Zahlenmittel des Molekulargewichts. Insofern auf das Gewichtsmittel des Molekulargewichts Bezug genommen wird, wird dies explizit erwähnt.

Es hat sich ferner als vorteilhaft erwiesen, dass die Partikel des thermoplastischen Polymers, welches für die Herstellung einer vorteilhaften Zusammensetzung eingesetzt werden, eine BET-Oberfläche von mindestens 0,1 m²/g und/oder nicht mehr als 10 m²/g aufweisen. Methoden zur Bestimmung der BET-Oberfläche, wie beispielsweise durch Gasadsorption nach dem Prinzip von Brunauer, Emmet und Teller (BET) sind dem Fachmann bekannt; die herangezogene Norm ist DIN EN ISO 9277. Die nach dieser Methode bestimmte Partikeloberfläche wird als BET-Oberfläche bezeichnet.

Gemäß einer bevorzugten Ausführungsform liegt die BET-Oberfläche einer vorteilhaften Zusammensetzung bei nicht mehr als 5 m²/g, besonders bevorzugt bei nicht mehr als 2 m²/g, insbesondere bei nicht mehr als 1,5 m²/g, insbesondere bevorzugt bei nicht mehr als 1 m²/g.

Vorzugsweise umfasst eine solche Zusammensetzung Polymerpartikel, welche ausgewählt sind aus einem Polyaryletherketon.

Insofern bevorzugte Polyaryletherketon-Partikel aus Polymerisations-Flakes erhalten werden, weisen diese Polyaryletherketon-Partikel bevorzugt eine BET-Oberfläche von zumindest 0,5 m²/g auf. Besonders bevorzugt werden solche Polyaryletherketon-Partikel durch Vermahlen erhalten.

Das zumindest eine Polymer kann dabei ausgewählt sein aus zumindest einem Homo- und/oder Heteropolymeren und/oder aus einem Polymerblend, wobei das zumindest eine Homo- und/oder Heteropolymer und/oder Polymerblend ein teilkristallines Homo- und/oder Heteropolymer und/oder amorphes Homo- und/oder Heteropolymer umfassen kann.

Bevorzugt ist das zumindest eine Homo- und/oder Heteropolymer und/oder Polymerblend ausgewählt aus zumindest einem teilkristallinen Polymer oder einem teilkristallinen Polymerblend aus zumindest einem teilkristallinen Polymer und mindestens einem weiteren teilkristallinen Polymer oder einem teilkristallinen Polymerblend aus zumindest einem teilkristallinen Polymer und einem amorphen Polymer. Gemäß einer weiter bevorzugten Ausführungsform umfasst das Polymer zumindest ein teilkristallines Polymer, bevorzugt ein teilkristallines Copolymer und/oder ein teilkristallines Polymerblend.

Unter dem Begriff "teilkristallin" ist im vorliegenden Fall ein Stoff zu verstehen, welcher sowohl kristalline als auch amorphe Bereiche enthält. Ein Polymer wird insbesondere dann als im Wesentlichen amorph angesehen, wenn mittels dynamischer Differenzkalorimetrie (DSC) kein Schmelzpunkt feststellbar ist und/oder die Schmelzenthalpie unter 1 J/g liegt. Ein teilkristalliner Stoff kann schließlich bis zu 95 Gew.-%, bevorzugt bis zu 99 Gew.-%, insbesondere bis zu 99,9 Gew.-%, kristalline Bereiche umfassen.

Unter Verwendung eines oder mehrerer der genannten Polymere (Homopolymere, Copolymere oder Polymerblends) lässt sich eine bevorzugt pulverförmige Zusammensetzung herstellen, welche zumindest teilweise teilkristallin und/oder amorph ist.

Gemäß einer weiter bevorzugten Ausführungsform umfasst eine vorteilhafte Zusammensetzung zumindest einen Hilfsstoff, wobei der Hilfsstoff vorzugsweise ausgewählt ist aus Wärmestabilisatoren, Oxidationsstabilisatoren, UV-Stabilisatoren, Füllstoffen, Farbstoffen, Weichmacher, Verstärkungsfasern, SiO₂-Partikeln, Antiagglomerationsmitteln, Carbonfasern, Glasfasern, Carbon Nanotubes, mineralischen Fasern (z. B. Wollastonit), Aramid-Fasern (insbesondere Kevlar-Fasern), Glaskugeln, mineralischen Füllstoffen, anorganischen und/oder organischen Pigmenten und/oder Flammschutzmitteln (insbesondere phosphathaltigen Flammschutzmitteln wie Ammoniumpolyphosphat und/oder bromierten Flammschutzmitteln und/oder anderen halogenierten Flammschutzmitteln und/oder anorganischen Flammschutzmitteln wie Magnesiumhydroxid oder Aluminiumhydroxid). Weitere besonders bevorzugte Hilfsstoffe umfassen Polysiloxane. Polysiloxane können dabei beispielsweise als Fließhilfsmittel zur Verringerung der Viskosität der Polymerschmelze und/oder insbesondere bei Polymerblends als Weichmacher dienen.

Der Gehalt eines Hilfsstoffs an der erfindungsgemäßen Zusammensetzung kann dabei bevorzugt bei mindestens etwa 0,01 Gew.-% und/oder bei höchstens etwa 90 Gew.-% liegen, vorzugsweise bei mindestens 0,01 Gew.-% und/oder bei höchstens 50 % Gew.-%. Für Hilfsstoffe wie Oxidationsstabilisatoren, UV-Stabilisatoren, Farbstoffe liegt der Gehalt bevorzugt bei mindestens 0,01 Gew.-% und/oder bei höchstens 5 Gew.-%, insbesondere bei mindestens 0,01 Gew.-% und/oder bei höchstens 2 Gew.-%.

Gemäß einer weiter bevorzugten Ausführungsform umfasst eine vorteilhafte Zusammensetzung zumindest ein Antiagglomerationsmittel. Der Begriff "Antiagglomerationsmittel" wird dabei synonym zur Bezeichnung "Rieselhilfsmittel" verwendet. Unter einem "Antiagglomerationsmittel" wird vorliegend ein Stoff in Form von Partikeln verstanden, welcher sich an und/oder in die Polymerpartikel lagern kann.

In einer vorteilhaften Zusammensetzung liegt ein bevorzugter Anteil des zumindest einen Antiagglomerationsmittels bei höchstens etwa 1 Gew.-%, weiter bevorzugt bei höchstens etwa 0,5 Gew.-%, besonders bevorzugt bei höchstens etwa 0,2 Gew.-%, insbesondere bei höchstens etwa 0,15 Gew.-%, insbesondere bevorzugt bei höchstens etwa 0,1 Gew.-%. Der Anteil bezieht sich dabei auf den Anteil aller in der vorteilhaften Zusammensetzung enthaltenen Antiagglomerationsmittel.

Ein bevorzugtes Antiagglomerationsmittel kann dabei ausgewählt sein aus der Gruppe der Metallseifen, bevorzugt aus einem Siliziumdioxid, Stearat, Tricalciumphosphat, Calciumsilicat, Aluminiumoxid, Magnesiumoxid, Magnesiumcarbonat, Zinkoxid oder Mischungen dergleichen.

Gemäß einer weiter bevorzugten Ausführungsform umfasst ein erstes Antiagglomerationsmittel Siliziumdioxid, besonders bevorzugt pyrogenes Siliziumdioxid.

Weiter bevorzugt kann auch ein zweites Antiagglomerationsmittel aus Siliziumdioxid ausgewählt sein, insbesondere aus einem pyrogenen Siliziumdioxid.

Selbstverständlich kann eine erfindungsgemäße Zusammensetzung auch mehr als ein bzw. zwei Antiagglomerationsmittel aufweisen.

Unter der Bezeichnung "Schüttdichte" wird das Verhältnis der Masse eines körnigen Feststoffs, welcher durch Schütten und nicht durch beispielsweise Stampfen oder Rütteln verdichtet wurde, zum eingenommenen Schüttvolumen bezeichnet. Die Bestimmung der Schüttdichte ist dem Fachmann bekannt und kann beispielsweise nach der DIN EN ISO 60:2000-01 erfolgen.

Eine besonders vorteilhafte Zusammensetzung weist eine Schüttdichte von mindestens etwa 200 kg/m³, bevorzugt von mindestens etwa 250 kg/m³ und besonders bevorzugt von mindestens 300 kg/m³ und/oder von höchstens etwa 650 kg/m³, bevorzugt von höchstens 500 kg/m³ und besonders bevorzugt von höchstens 480 kg/m³ auf.

Für die oben erläuterten additiven Fertigungsverfahren werden Pulver mit relativ runder Kornform benötigt, da bei Vorliegen kantiger Partikel beim Auftragen der Pulverschichten Riefen entstehen können, wodurch insbesondere ein automatischer Bauprozess erschwert ist und die Qualität der so entstehenden Bauteile verschlechtert wird, insbesondere deren Dichte und Oberflächenbeschaffenheit. Häufig besteht jedoch die Problematik, Polymere bzw. Copolymere in Form eines Pulvers mit runden Partikeln zu erhalten.

Durch die erfindungsgemäße Zusammensetzung können vorteilhaft runde Partikel erhalten werden.

Im Allgemeinen sind für Zusammensetzungen, welche in Lasersinterverfahren eingesetzt werden, eine entsprechende Korngröße bzw. Korngrößenverteilung, eine geeignete Schüttdichte sowie eine ausreichende Rieselfähigkeit des Pulvermaterials von Bedeutung.

Der Begriff "Korngröße" beschreibt die Größe einzelner Partikel bzw. Körner in einem Gesamtgemenge. Die Korn- oder Partikelgrößenverteilung hat dabei einen Einfluss auf die Stoffeigenschaften eines Schüttguts, also des körnigen Gesamtgemenges, welches in einer schüttfähigen Form, beispielsweise in einer pulverförmigen Zusammensetzung, vorliegt.

Zur Verringerung der Porosität der resultierenden Bauteile weisen üblicherweise eingesetzte Polymersysteme geringe Partikelgrößen bzw. Partikeldurchmesser auf. Auch können die Polymersysteme bei deren Herstellung modifiziert werden, was jedoch häufig dazu führt, dass die Partikel agglomerieren. Schüttet man solche Polymersysteme etwa in ein Pulverbett eines Lasersintersystems, können sich Verklumpungen, also inhomogene Partikelverteilungen, bilden, welche nicht kontinuierlich aufschmelzen und wodurch ein Formkörper aus inhomogenem Material erhalten wird, dessen mechanische Stabilität verringert sein kann. Schließlich können beim Schütten auftretende Verklumpungen die Rieselfähigkeit verschlechtern und damit die Dosierbarkeit einschränken. Daher werden den solchen Polymersystemen häufig Antiagglomerationsmittel (*syn.* Rieselhilfsmittel) zugesetzt, welche sich an die Partikel des Polymersystems anlagern und Verklumpungen, die beispielsweise bei Schüttvorgängen und/oder beim Auftrag im Pulverbett entstehen können, entgegenwirken.

Gemäß einer weiter bevorzugten Ausführungsform weisen die Partikel einer vorteilhaften Zusammensetzung eine Korngrößenverteilung
- d10 = von mindestens 10 µm, bevorzugt von mindestens 20 µm und/oder von höchstens 50 µm, bevorzugt von höchstens 40 µm
- d50 = von mindestens 25 µm und/oder von höchstens 100 µm, bevorzugt von mindestens 30 µm und/oder von höchstens 80 µm, besonders bevorzugt von mindestens 40 µm und/oder von höchstens 60 µm
- d90 = von mindestens 50 µm und/oder von höchstens 150 µm, vorzugsweise von höchstens 120µm,
auf.

Methoden zur Bestimmung der Korngröße bzw. der Korngrößenverteilung sind dem Fachmann bekannt und können beispielsweise mit einem Messgerät des Typs Camsizer XT (Retsch Technology, Deutschland) gemäß DIN ISO 13322-2 erfolgen.

Eine besonders bevorzugte Zusammensetzung umfasst dabei ein Polymer, welches ausgewählt ist aus einem Polyaryletherketone, wobei das Polymer eine Korngrößenverteilung wie folgt aufweist:
- d10 = von mindestens 15 µm, vorzugsweise von mindestens 20 µm, besonders bevorzugt von mindestens 25 µm und/oder von höchstens 50 µm, bevorzugt von höchstens 40 µm, insbesondere von höchstens 30 µm
- d50 = von mindestens 40 µm und/oder von höchstens 100 µm, bevorzugt von höchstens 45 µm und/oder von höchstens 80 µm, bevorzugt von höchstens 50 µm und/oder von höchstens 65 µm
- d90 = von mindestens 70 µm und/oder von höchstens 150 µm, bevorzugt von mindestens 80 µm und/oder von höchstens 130 µm, besonderes bevorzugt von höchstens 120 µm, insbesondere von höchstens 110 µm.

Besonders bevorzugt umfasst eine Zusammensetzung ein Polyaryletherketon, welches durch Vermahlen von Polymerisations-Flakes erhalten wird.

Gemäß einer bevorzugten Ausführungsform weist eine vorteilhafte Zusammensetzung eine Verteilungsbreite (d90-d10)/d50 von höchstens 3, bevorzugt von höchstens 2, besonders bevorzugt von höchstens 1,5, insbesondere von höchstens 1, auf.

Eine weiter bevorzugte Zusammensetzung weist einen Feinanteil, also einen Anteil von Partikeln mit einer Partikelgröße von kleiner 10 µm, von unter 5 Gew.-%, bevorzugt von unter 3 Gew.-%, insbesondere von unter 2 Gew.-%, insbesondere bevorzugt von unter 1 Gew.-%, auf.

Die Polymerpartikel der erfindungsgemäßen Zusammensetzung weisen bevorzugt eine im Wesentlichen sphärische bis linsenförmige Ausgestaltung bzw. Form auf. Besonders bevorzugt weisen die Polymerpartikel einer besonders vorteilhaften Zusammensetzung eine Sphärizität von mindestens etwa 0,7 bevorzugt von mindestens etwa 0,8, insbesondere von mindestens etwa 0,9, insbesondere bevorzugt von mindestens etwa 0,95 auf. Die Bestimmung der Sphärizität kann beispielweise mit Hilfe der Mikroskopie (gemäß DIN ISO 13322-1) und/oder eines Messgeräts vom Typ Camsizer XT (Retsch Technology, Deutschland) (gemäß DIN ISO 13322-2) erfolgen.

Es hat sich weiter gezeigt, dass die Zugfestigkeit und Bruchdehnung als Werkstoffeigenschaften bzw. als Maß für die Prozessierbarkeit der erfindungsgemäßen Bauteile von Nutzen sein kann.

Gemäß einer weiter bevorzugten Ausführungsform weist ein vorteilhaftes Bauteil eine Zugfestigkeit von mindestens etwa 5 MPa, bevorzugt von mindestens etwa 25 MPa, insbesondere von mindestens etwa 50 MPa, auf. Höchstens weist die bevorzugte Zusammensetzung eine Zugfestigkeit von etwa 500 MPa, bevorzugt von höchstens etwa 350 MPa, insbesondere von höchstens etwa 250 MPa, auf. Die Werte für die Bruchdehnung der bevorzugten Zusammensetzung liegen dabei bei mindestens etwa 1 %, besonders bevorzugt bei mindestens etwa 5 %, insbesondere bei mindestens etwa 50 %. Höchstens weist eine bevorzugte Zusammensetzung eine Bruchdehnung von etwa 1000 %, weiter bevorzugt von höchstens etwa 800 %, besonders bevorzugt von höchstens etwa 500 %, insbesondere von höchstens etwa 250 %, insbesondere bevorzugt von höchstens etwa 100 %, auf. Die Bestimmung der Zugfestigkeit und Bruchdehnung kann mit Hilfe des sogenannten Zugversuchs nach DIN EN ISO 527 ermittelt werden und ist dem Fachmann bekannt.

Ferner kann die erfindungsgemäße Zusammensetzung auf deren Dosierbarkeit im kalten bzw. warmen Zustand in der Lasersinteranlage, deren Schichtauftrag und Pulverbettzustand im kalten bzw. warmen Zustand, deren Schichtauftrag im Lasersinterprozess, bevorzugt im laufenden Lasersinterprozess, insbesondere deren Beschichtung auf belichteten Flächen und der Maßhaltigkeit und der mechanischen Eigenschaften der erhaltenen Probekörper bewertet werden.

Weiterhin ist es vorteilhaft, wenn die Zusammensetzung zumindest ein Zusatzmittel umfasst, welches eine Anpassung der mechanischen, elektrischen, magnetischen, flammschützenden und/oder ästhetischen Pulver- bzw. Produkteigenschaften erlaubt. In einer bevorzugten Ausführungsform umfasst die Zusammensetzung zumindest ein organisches und/oder anorganisches Zusatzmittel wie beispielsweise Glas-, Metall-, zum Beispiel Aluminium- und/oder Kupfer- und/oder Eisen-, Keramikpartikel, Metalloxide oder Pigmente zur Variation der Farbe, bevorzugt Titandioxid oder Ruß.

Alternativ oder zusätzlich kann das Zusatzmittel auch aus einer Faser, wie beispielsweise einer Carbon-, Glas- und/oder Keramikfaser, wie z. B. Wollastonit, ausgewählt sein. Dadurch kann auch das Absorptionsverhalten des Pulvers beeinflusst werden. Füllstoffe zur Anpassung der mechanischen Eigenschaften können auch ausgewählt sein aus der Gruppe der Metalloxide, oder aus Calciumcarbonat. Flammhemmende Zusatzmittel können beispielsweise ausgewählt sein aus der Gruppe umfassend Metallhydroxide wie Magnesiumhydroxid oder Aluminiumhydroxid, Phosphorverbindungen wie z. B. Roter Phosphor oder Ammoniumpolyphosphat oder bromhaltige Flammschutzmittel.

Des Weiteren kann es vorteilhaft sein, wenn die Zusammensetzung zumindest ein Zusatzmittel umfasst, welches zur thermo-oxidativen Stabilisierung des Polymers und/oder zur UV-Stabilisierung eingesetzt wird. Dabei kann es sich z. B. um ein Antioxidationsmittel und/oder um einen UV-Stabilisator handeln. Ein solches Antioxidationsmittel kann beispielsweise unter dem Handelsnamen Irganox oder Irgafos bei der Firma BASF (Ludwigshafen, Deutschland) bezogen werden; ein UV-Stabilisator kann beispielsweise unter dem Handelsnamen Tinuvin über die Firma BASF erhalten werden.

Neben einer Funktionalisierung durch den Zusatz von beispielsweise Pigmenten können prinzipiell auch Verbindungen mit bestimmten funktionellen Eigenschaften in einer oder mehreren der Schichten oder im gesamten Formkörper vorliegen. Eine Funktionalisierung könnte z. B. darin bestehen, dass der ganze Formkörper, eine oder mehrere Schichten des Formkörpers oder auch nur Teile einer oder mehrerer Schichten des Formkörpers elektrisch leitend ausgerüstet werden. Diese Funktionalisierung kann durch leitfähige Pigmente, wie z. B. Metallpulver, oder durch Verwendung von leitfähigen Polymeren, wie z. B. durch den Zusatz von Polyanilin, erreicht werden. Auf diese Weise sind Formkörper, die Leiterbahnen aufweisen, erhältlich, wobei diese sowohl oberflächlich als auch innerhalb des Formkörpers vorhanden sein können.

Weitere Merkmale der Erfindung ergeben sich aus der nachfolgenden Beschreibung von Ausführungsbeispielen in Verbindung mit den Ansprüchen. Es sei darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Kombination als bei den untenstehend angeführten Beispielen verwirklicht sein.

### Beispiele

### Beispiel 1

Messungen des Fortschreitewinkels einer erfindungsgemäßen Zusammensetzung.

Der dynamische Kontaktwinkel ist der im Zuge der Benetzung (Fortschreitewinkel) oder der Entnetzung (Rückzugswinkel) eines Festkörpers auftretende Kontaktwinkel. Beide Winkel werden mit der Plattenmethode nach Wilhelmy bestimmt. Hierbei berührt eine senkrechte Platte die Oberfläche einer Flüssigkeit bekannter Oberflächenspannung. Es wirkt nun eine Kraft auf die Platte.

Bei der dynamischen Kontaktwinkelbestimmung wird beim Eindringen der Probe in das Fluid der Fortschreitewinkel und beim Rückzug der Probe aus dem Fluid der Rückzugswinkel bestimmt. Insbesondere der Fortschreitewinkel wird zur Untersuchung fester Oberflächen herangezogen, weil der Kontaktwinkel dabei an einer immer frisch benetzten Fläche und außerdem an vielen, dicht beieinander liegenden Positionen gemessen wird. Auf diese Weise werden Zeiteffekte wie z.B. Verdunstung minimiert und lokale Inhomogenitäten herausgemittelt.

Eine erfindungsgemäße Zusammensetzung wurde in fünf Schritten erzeugt. Im ersten Schritt wurde ein Feinpulver mit einer dem Fachmann bekannten Methode erzeugt. Hierzu wurde ein Kunststoffgrobpulver (Flakes) vom Typ PEKK Kepstan^{®} 6002 gemahlen und anschließend gesiebt. Das Pulver (Probe Nr. 1) wurde anschließend in einem Mischer vom Typ Henschel FML gemäß Tabelle 1 (siehe unten) thermomechanisch behandelt. Die Masse des Pulvers wird nachfolgend mit "m" bezeichnet. Phase 1 bezieht sich auf die Aufheizphase, d. h. die Phase bis zu dem Zeitpunkt, an dem das Pulver im Mischer die maximale Temperatur Tmax erreicht hat. Tmax entspricht der Behandlungstemperatur TB. Die Geschwindigkeit des Mischers in Phase 1 wird als D1 bezeichnet. Die Drehzahl des Mischers in Phase 2 wird als D2 bezeichnet. Die Zeitdauer der thermomechanischen Behandlung liegt üblicherweise im Bereich von etwa 10 bis etwa 120 Minuten. So kann das Pulver beispielsweise über eine Zeitdauer von etwa 20 bis etwa 40 Minuten erhitzt werden.

**Tabelle 1: Darstellung der Parameter für die thermomechanische Behandlung des Pulvers.**

| Probe Nr. | Tₘₐₓ [°C] | m [kg] | D₁ [m/s] | D₂ [m/s] |
|---|---|---|---|---|
| 1 | 113 | 8,5 | 46,8 | 46,8 |

Die erhaltenen Werte für die Schüttdichte S, die BET-Oberfläche, den Anteil der Pulverpartikel mit einer Korngröße von 10 µm in Volumenprozent ("% < 10 µm") und die Quantile d10, d50 und d90 der Partikelgrößenverteilung sind in Tabelle 2 angegeben.

**Tabelle 2: Merkmale des thermomechanisch behandelten Pulvers.**

| Probe | Korngrößenverteilung | | | | |
|---|---|---|---|---|---|
| Nr. | d10 | d50 | d90 | < 10 µm | (d90 - d10)/d50 |
| 1 | 23,6 | 56 | 100,9 | 1 | 1,38 |

Das Pulver wurde anschließend in einem Umluftofen (Typ Nabertherm N250/A) unter Stickstoffatmosphäre für 3 Stunden bei 265 °C temperiert und nachfolgend auf einem Vibrationssieb (Maschenweite 160 µm) vom Typ Perflux 501 (Siebtechnik GmbH, Mühlheim, Deutschland) gesiebt. Die Werte für das so erhaltene Pulver (Probe Nr. 1) sind in Tabelle 3 gezeigt.

**Tabelle 3: Merkmale des thermomechanisch behandelten und temperierten Pulvers.**

| Probe | Korngrößenverteilung | | | | | Schüttdichte | Kohäsionsspannung | R² |
|---|---|---|---|---|---|---|---|---|
| Nr. | d10 | d50 | d90 | <10 µm | (d90-d10)/ d50 | [g/cm3] | 10³[Pa] | [1] |
| 1 | 23,7 | 55,2 | 97,2 | 0,7 | 1,33 | 33,9 | 0,6593 | 0,9986 |

Anschließend erfolgt das Einmischen des Absorbers. Zur Herstellung eines Masterbatches wird ein Labor-Taumelmischer vom Typ Turbula der Firma Willy A. Bachofen AG verwendet. In ein dazu passendes Mischgefäß werden 400 g Pulver einer Gesamteinwaage von 5 kg eingewogen. Der Absorber (Typ Spezial Schwarz 4) wird im Anschluss in einer Konzentration von 6,25 Gew % (bezogen auf die Einwaage von 400 g) hinzugegeben. Das Gemisch wird für 10 min bei einer Frequenz von 70 Hz gemischt. Der Masterbatch wird anschließend mit 4,6 kg des thermomechanisch behandeltem und temperiertem PEKK, welches keinen Absorber enthält (siehe Probe Nr. 1, wie oben beschrieben), verdünnt, so dass die Endkonzentration des Absorbers in der Zusammensetzung bei 0,5 Gew.-% liegt. Die Zusammensetzung wird nachfolgend in einem 12 Liter Mischbehälter unter Verwendung eines Labor-Containermischers der Firma Mixaco Maschinenbau zunächst für 3 min bei einer Umdrehungszahl von 1000 U/min und dann für 3 min bei einer Umdrehungszahl von 1500 U/min gemischt. Anschließend erfolgt eine Schutzsiebung bei einer Maschenweite von 160 µm. Die so erhaltene erfindungsgemäße Zusammensetzung wird nachfolgend als Probe Nr. 1R benannt.

Zur Bestimmung des Kontaktwinkels kommt ein Tensiometer vom Typ Krüss Force Tensiometer K 100 zum Einsatz. Die Daten werden mittels ADVANCE Software der Firma Krüss ausgewertet.

Für die Messung des Rückzugswinkels wird eine erfindungsgemäße Zusammensetzung auf ein doppelseitiges Klebeband aufgebracht und der Überschuss mit Druckluft entfernt. Auf diese Weise wird ein Prüfkörper mit einer Länge von 20 mm erzeugt. Die Breite des Prüfkörpers variiert zwischen 0,28 mm und 0,36 mm. Das Ergebnis der Messung ist in Tabelle 4 dargelegt.

**Tabelle 4: Rückzugswinkel der erfindungsgemäßen Zusammensetzung umfassend Polyetherketonketon (PEKK) und Ruß.**

| Probe | Absorber | Rückzugswinkel [°] |
|---|---|---|
| Nr. 1R | Ruß | 89.82 |

### Beispiel 2

Messung des Fortschreitewinkels einer erfindungsgemäßen Zusammensetzung.

Die Herstellung einer erfindungsgemäßen Zusammensetzung zur Bestimmung des Fortschreitewinkels erfolgt in Analogie zu Beispiel 1. Ebenfalls kommen die dort beschriebenen Messprinzipien zum Einsatz. Das Ergebnis der Messung ist in Tabelle 5 dargelegt.

**Tabelle 5: Fortschreitewinkel der erfindungsgemäßen Zusammensetzung umfassend Polyetherketonketon (PEKK) und Ruß.**

| Probe | Absorber | Fortschreitewinkel [°] |
|---|---|---|
| Nr. 1R | Ruß | 167.18 |

### Beispiel 3

Bestimmung des Prozessfensters und der Fließeigenschaften (Fließfähigkeit) der erfindungsgemäßen Zusammensetzung gemäß Beispiel 1 und 2.

### Bestimmung des Prozessfensters:

Die Prozesskammertemperaturen werden qualitativ durch Beurteilung der Pulverbettkonsistenz mittels Fingereindruck und "Curl" an Temperatursuchkreuzen bestimmt. Unter der Bezeichnung "Curl" ist vorliegend eine Verformung der Ränder einer belichteten Fläche zu verstehen, die sich krümmen und nicht flach im Pulverbett liegen bleiben. Hierbei wird in der Regel aus den thermischen Eigenschaften, welche mittels DSC (Differential Scanning Calorimetry) bestimmt wurden, eine untere Prozesstemperatur ermittelt. Es findet eine Belichtung statt. Zeigen die belichteten Flächen einen Curl, wird, um Material zu sparen, die Temperatur so lange um 3 °C erhöht, bis die Schmelze im Pulverbett fehlerfrei liegen bleibt. Ist die sogenannte "non-Curl Temperatur" T_{NC} bestimmt, wird die Temperatur in denselben Schritten erhöht, bis die Pulveroberfläche eine ledrige Beschaffenheit zeigt. Bei dieser Temperatur spricht man von der maximalen Prozesskammertemperatur T_{PKM}. Aus der Differenz von T_{PKM} und T_{NC} ergibt sich das Prozessfenster ΔTs. Der Unterschied des Prozessfensters ΔTs einer erfindungsgemäßen Zusammensetzung umfassend ein Polyetherketonketon mit Absorber im Vergleich zu einer Zusammensetzung, welche keinen Absorber umfasst, ist in Tabelle 6 dargelegt: Das Prozessfenster einer erfindungsgemäßen Zusammensetzung ist mit 6 °C doppelt so breit wie das Prozessfenster des Vergleichs-Zusammensetzung, welches lediglich eine Breite von 3 °C zeigt.

**Tabelle 6: Bestimmung des Prozessfensters ΔTs einer erfindungsgemäßen Zusammensetzung von PEKK im Vergleich zu einer Zusammensetzung ohne Absorber.**

| Probe | Absorber | T_{NC} [°C] | T_{PKM} [°C] | ΔTs [°C] |
|---|---|---|---|---|
| Nr. 1 | - | 282 | 285 | 3 |
| Nr. 1R | Ruß | 276 | 282 | 6 |

### Bestimmung der Fließeigenschaften:

Zur Bestimmung der Fließeigenschaften der Pulverproben wird ein Pulverrheometer der Firma Freeman Technology vom Typ FT 4 verwendet. Zur Datenanalyse kommt die Software Data Analysis 4 zum Einsatz. Die Proben werden für 24 Stunden bei Normklima (23 °C, 50 % relative Luftfeuchtigkeit) konditioniert. Als Testmethode wird die eigens von Freeman erstellte Scherzellenmessung 50 mm Shear 15 kPa 11 steps verwendet. Zur Durchführung der Messung fährt der Scherkopf in die Pulverprobe. Sobald die radial angeordneten Messer des Scherkopfes in die Probe eingedrungen sind, setzt mit fortschreitender Bewegung eine Kompression der Probe ein, es baut sich eine Normalspannung σ auf. Ist die gewünschte Normalspannung angefahren, beginnt der Scherkopf langsam zu rotieren. Es wird eine Scherspannung T induziert. Als Maßzahl der Fließfähigkeit wird das Bestimmtheitsmaß R² aus der linearen Regression der Ermittelten Fließlinien sowie der Schnittpunkt der Regressionsgeraden mit der Ordinate verwendet. Der Schnittpunkt wird Kohäsionsspannung genannt. Eine verbesserte Fließfähigkeit zeigt sich durch ein Bestimmtheitsmaß von R² → 1 sowie einer Verringerung der Kohäsionsspannung.

**Tabelle 7: Bestimmung der Fließfähigkeit mit Hilfe des Bestimmtheitsmaßes R² und der Kohäsionsspannung.**

| Probe | Absorber | Kohäsionsspannung 10³ [Pa] | R² |
|---|---|---|---|
| | | | [1] |
| Nr. 1 | - | 0.6593 | 0.9986 |
| Nr. 1R | Ruß | 0.2957 | 0.9998 |

## Patentansprüche

1. Zusammensetzung, insbesondere zur Verwendung als Aufbaumaterial zur additiven Herstellung eines 3D Objekts, umfassend
(a) zumindest ein Polymer,
wobei das Polymer in Form von Polymerpartikeln vorliegt,
wobei das Polymer ausgewählt ist aus zumindest einem thermoplastischen Polymer,
und
(b) zumindest einen Absorber,
wobei der Absorber bevorzugt in Form von Partikeln vorliegt, und
wobei der Absorber einen Anteil an der Zusammensetzung von mindestens 0,05 Gew.-%, bevorzugt von mindestens 0,12 Gew-%, insbesondere von mindestens 0,22 Gew.-%, aufweist,
und/oder
wobei der Absorber einen Anteil an der Zusammensetzung von höchstens 2,5 Gew.-%, bevorzugt von höchstens 1,5 Gew.-%, insbesondere von höchstens 0,5 Gew.-%, aufweist,
wobei die Zusammensetzung einen Rückzugswinkel von mindestens 50 °, bevorzugt von mindestens 60 °, und/oder von höchstens 150 °, bevorzugt von höchstens 120 °, aufweist,
und
wobei die Zusammensetzung bevorzugt einen Fortschreitewinkel von mindestens 155 °, bevorzugt von mindestens 158 °, und/oder von höchstens 175 °, bevorzugt von höchstens 170 °, aufweist.

2. Zusammensetzung nach Anspruch 1, wobei der zumindest eine Absorber aus der Gruppe der NIR-Absorber ausgewählt ist, wobei der NIR-Absorber bevorzugt ausgewählt ist aus zumindest einem Ruß, insbesondere aus Rußschwarz.

3. Zusammensetzung gemäß einem der vorhergehenden Ansprüche, wobei das thermoplastische Polymer ausgewählt ist aus zumindest einem Polyetherimid, Polycarbonat, Polysulfon, Polyphenylensulfon, Polyphenylenoxid, Polyethersulfon, Acrylnitril-Butadien-Styrol-Copolymerisat, Acrylnitril-Styrol-Acrylat-Copolymerisat, Polyvinylchlorid, Polyacrylat, Polyester, Polyamid, Polypropylen, Polyethylen, Polyaryletherketon, Polyether, Polyurethan, Polyimid, Polyamidimid, Polyolefin, und/oder Polyarylensulfid, sowie deren Copolymere und/oder mindestens ein Polymerblend auf der Basis der vorgenannten Polymere und/oder Copolymere, insbesondere wobei das zumindest eine Polymer ausgewählt ist aus einem Polyaryletherketon sowie dessen Copolymere und/oder mindestens einem Polymerblend auf der Basis von Polyaryletherketon.

4. Zusammensetzung gemäß einem der vorhergehenden Ansprüche, wobei die Polymerpartikel durch Vermahlung von Polymerflakes erhalten werden.

5. Zusammensetzung gemäß einem der Ansprüche 3 bis 4, wobei das Polyaryletherketon ausgewählt ist aus der Gruppe von Polyetherketonketon (PEKK) und/oder aus der Gruppe von Polyetheretherketon-Polyetherdiphenyletherketon (PEEK-PEDEK) und/oder Polyetheretherketon-Polyethermetaetherketone PEEK-PEmEK

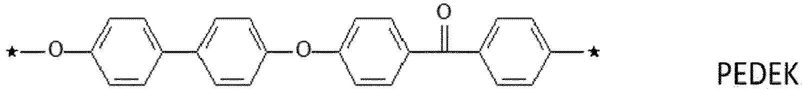

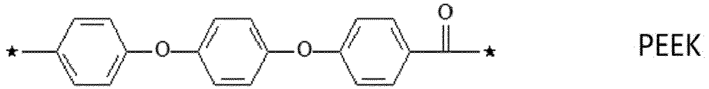

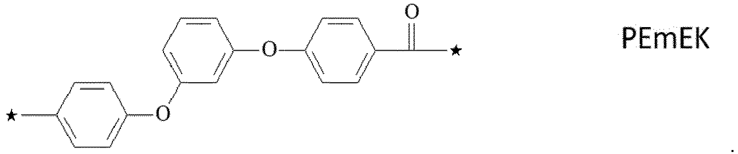

6. Zusammensetzung gemäß einem der vorhergehenden Ansprüche, wobei das Polymer zumindest ein teilkristallines Polymer, bevorzugt ein teilkristallines Copolymer und/oder ein teilkristallines Polymerblend, umfasst.

7. Zusammensetzung gemäß einem der Ansprüche 5 bis 6, wobei das Polyetherketonketon folgende Wiederholungseinheiten 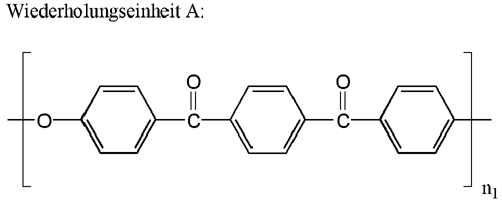 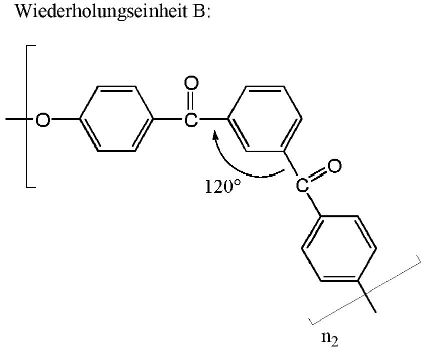 aufweist, wobei das Verhältnis der Wiederholungseinheit A zu Wiederholungseinheit B bevorzugt bei etwa 60 zu etwa 40 liegt.

8. Zusammensetzung gemäß einem der vorhergehenden Ansprüche, wobei die Zusammensetzung eine Schüttdichte von mindestens 200 kg/m³, bevorzugt von mindestens 250 kg/m³ und besonders bevorzugt von mindestens 300 kg/m³ und/oder von höchstens etwa 650 kg/m³, bevorzugt von höchstens 500 kg/m³ und besonders bevorzugt von höchstens 480 kg/m³ aufweist.

9. Verfahren zur Herstellung einer Zusammensetzung, wobei das Verfahren folgende Schritte umfasst:
(i) Bereitstellen zumindest eines Polymers,
wobei das Polymer bevorzugt in Form von Polymerpartikeln vorliegt,
wobei das Polymer ausgewählt ist aus zumindest einem thermoplastischen Polymer,
(ii) Mischen, vorzugsweise Dispergieren, des Polymers mit zumindest einem Absorber,
(iii) wobei der Absorber bevorzugt in Form von Partikeln vorliegt, wobei der zumindest eine Absorber besonders bevorzugt aus Ruß ausgewählt ist,
und
wobei der Absorber einen Anteil an der Zusammensetzung von mindestens 0,05 Gew.-%, bevorzugt von mindestens 0,12 Gew-%, insbesondere von mindestens 0,22 Gew.-%, aufweist,
und/oder
wobei der Absorber einen Anteil an der Zusammensetzung von höchstens 2,5 Gew.-%, bevorzugt von höchstens 1,5 Gew.-%, insbesondere von höchstens 0,5 Gew.-%, aufweist,
wobei die Zusammensetzung einen Rückzugswinkel von mindestens 50 °, bevorzugt von mindestens 60 °, und/oder von höchstens 150 °, bevorzugt von höchstens 120 °, aufweist,
und
wobei die Zusammensetzung bevorzugt einen Fortschreitewinkel von mindestens 155 °, bevorzugt von mindestens 158 °, und/oder von höchstens 175 °, bevorzugt von höchstens 170 °, aufweist.

10. Verfahren zum Herstellen eines Bauteils, insbesondere eines dreidimensionalen Objekts, umfassend die Schritte:
(i) Aufbringen einer Schicht einer Zusammensetzung gemäß einem der Ansprüche 1 bis 8 und/oder einer Zusammensetzung hergestellt nach einem Verfahren gemäß Anspruch 9, vorzugsweise eines Pulvers, auf ein Baufeld,
(ii) selektives Verfestigen der aufgebrachten Schicht der Zusammensetzung an Stellen, die einem Querschnitt des herzustellenden Objekts entsprechen, bevorzugt mittels einer Bestrahlungseinheit, und
(iii) Absenken des Trägers und Wiederholen der Schritte des Aufbringens und des Verfestigens, bis das Bauteil, insbesondere das dreidimensionale Objekt, fertiggestellt ist.

11. Zusammensetzung gemäß einem der Ansprüche 1 bis 8, wobei die Zusammensetzung bevorzugt nach einem Verfahren gemäß Anspruch 9 erhältlich ist.

12. Bauteil, insbesondere dreidimensionales Objekt, umfassend eine Zusammensetzung gemäß einem der Ansprüche 1 bis 8, wobei das Bauteil bevorzugt nach einem Verfahren gemäß Anspruch 10 erhältlich ist.

13. Bauteil, welches durch Herstellung gemäß Anspruch 10 erhalten wird, wobei das Bauteil eine Bruchdehnung von mindestens 2 % und/oder von höchstens 3,5 % und/oder wobei das Bauteil eine Zugfestigkeit von mindestens 80 MPa und/oder von höchstens 90 MPa aufweist.

14. Vorrichtung zur Herstellung eines dreidimensionalen Objekts durch schichtweise Verfestigung einer Zusammensetzung an den Punkten, die dem Querschnitt des dreidimensionalen Objekts in der jeweiligen Schicht entsprechen, wobei die Vorrichtung mindestens eine Strahlungsquelle, die zur Abgabe von elektromagnetischer Strahlung ausgestaltet ist, eine Prozesskammer, die als (offener) Behälter ausgestaltet ist, und eine Behälterwand aufweist, einen Träger, der sich in der Prozesskammer befindet, wobei die Prozesskammer und der Träger gegeneinander in vertikaler Richtung beweglich sind, und einen in horizontaler Richtung beweglichen Vorratsbehälter und Beschichter aufweist, wobei der Vorratsbehälter mindestens teilweise mit einer Zusammensetzung gemäß mindestens einem der Ansprüche 1 bis 8 gefüllt ist.

15. Vorrichtung gemäß Anspruch 14, wobei die Strahlungsquelle Licht einer Wellenlänge im Bereich von 500 bis 1500 nm, vorzugsweise in einem der Wellenlängenbereiche 1064±8 nm und/oder 980±7 nm und/oder 940±7 nm und/oder 810±7 nm und/oder 640±7 nm oder Licht einer Wellenlänge von etwa 10,6 µm oder im Bereich von 4,8 bis 8.3 µm, bevorzugt bei etwa 5 µm, emittiert.

16. Verwendung einer Zusammensetzung, insbesondere eines pulverförmigen Materials gemäß einem der Ansprüche 1 bis 8, das insbesondere nach einem Verfahren gemäß Anspruch 9 hergestellt wurde oder gemäß Anspruch 11 erhältlich ist, für additive Fertigungsverfahren, bevorzugt aus der Gruppe der pulverbasierten Fertigungsverfahren, besonders bevorzugt der pulverbett-basierten additiven Fertigungsverfahren, umfassend Laser-Sintern, Highspeed-Sintern, Binder Jetting, MultiJetFusion, selektives Masken-Sintern, selektives Laser-Schmelzen, LaserProFusion, insbesondere zur Verwendung für ein Verfahren nach Anspruch 10.
